# EUROPEAN PATENT APPLICATION

(11) **EP 2 002 993 A2**
(43) Date of publication of application: **17.12.2008**
(21) Application number: 07741230.2
(22) Date of filing: 02.04.2007
(51) Int. Cl.: B60C 5/14

(54) **PNEUMATIC TIRE HAVING LIGHT SHIELDING LAYER ON SURFACE**

(30) Priority: 04.04.2006 JP 2006103373
(71) Applicant: The Yokohama Rubber Co., Ltd., Minato-ku Tokyo 105-8685 (JP)
(72) Inventor: TOMOI, Shusaku, Hiratsuka-shi Kanagawa 254-8601 (JP)
(74) Representative: HOFFMANN EITLE
(86) International application number: PCT/JP2007/057794
(87) International publication number: WO 2007/116983

(57) **Abstract**

A pneumatic tire having, as an air permeation preventive layer on the surface thereof, a layer of a thermoplastic resin or a layer of a thermoplastic elastomer composition comprising a thermoplastic resin, in which an elastomer component is dispersed, arranged and further having, on the surface of the layer of the thermoplastic resin or the layer of the thermoplastic elastomer composition, a light-blocking layer having a light transmittance of less than 10% in the range of a wavelength of 280 to 400 nm, wherein degradation of the air permeation preventive layer by sunlight is prevented using the thermoplastic resin or thermoplastic elastomer composition.

## Description

### TECHNICAL FIELD

The present invention relates to a pneumatic tire having a light-blocking layer on the surface thereof. More particularly, it relates to a pneumatic tire alleviating the problem of degradation caused by sunlight provided, as an air permeation preventive layer in a pneumatic tire, on a layer of a thermoplastic resin or a layer of a thermoplastic elastomer composition comprising a thermoplastic resin, in which an elastomer component is dispersed.

### BACKGROUND ART

Arranging, as an air permeation preventive layer (or inner liner) at a tire inner surface, a layer of a thermoplastic resin, or a layer of a thermoplastic elastomer composition comprising a thermoplastic resin in which an elastomer component is dispersed so as to reduce a tire weight has been proposed (e.g., see Japanese Patent Publication (A) No. 8-216610). However, if a pneumatic tire having a vulcanized layer of a thermoplastic resin, or a layer of a thermoplastic elastomer composition, on the surface in such a way is allowed to stand outdoors, direct sunlight strikes the layer of the thermoplastic resin, or the layer of the thermoplastic elastomer composition, causing the thermoplastic resin or the thermoplastic elastomer composition to be degraded.

### DISCLOSURE OF THE INVENTION

Accordingly, an object of the present invention is to prevent the degradation caused by sunlight striking the air permeation preventive layer of a pneumatic tire using a layer of a thermoplastic resin, or a layer of a thermoplastic elastomer composition comprising a thermoplastic resin, in which an elastomer component is dispersed, as the air permeation preventive layer.

In accordance with the present invention, there is provided a pneumatic tire having, as an air permeation preventive layer, a layer of a thermoplastic resin or a layer of a thermoplastic elastomer composition comprising a thermoplastic resin, in which an elastomer component is dispersed, arranged on the surface thereof and further having, on the surface of the layer of the thermoplastic resin or layer of the thermoplastic elastomer composition, a light-blocking layer having a light transmittance of less than 10% in the range of a wavelength of 280 to 400 nm.

According to the present invention, by mixing, for example, carbon black as a light-blocking substance in a release agent applied to a surface of a green tire, which contacts the surface of a tire vulcanization bladder at the time of vulcanization, so as to thereby form a light-blocking layer on the surface of an air permeation preventive layer (i.e., tire surface) containing a thermoplastic resin or a thermoplastic elastomer composition comprising a thermoplastic resin, in which an elastomer component is dispersed, and increase the weather resistance of the tire surface, it is possible to provide a pneumatic tire capable of preventing the degradation by irradiation by sunlight.

### BEST MODE FOR CARRYING OUT THE INVENTION

The inventors proceeded with research to solve the aforementioned problem, that is, the problem that, when a pneumatic tire having a layer of a thermoplastic resin or layer of a thermoplastic elastomer composition comprising a thermoplastic resin, in which an elastomer component is dispersed, arranged on the surface of the product is allowed to stands outdoors, the sunlight, in particular the ultraviolet light, causes the tire surface to be degraded, and, as a result, succeeded in obtaining a pneumatic tire having good weather resistance, without blending a photodegradation preventing agent, etc. into the layer of the thermoplastic resin or the layer of the thermoplastic elastomer composition comprising a thermoplastic resin, in which an elastomer component is dispersed, by suppressing the photodegradation by providing a light-blocking layer on the surface of the molded article.

In such a way, according to the present invention, the inventors found that the photodegradation of the thermoplastic resin or the thermoplastic elastomer composition comprising a thermoplastic resin in which an elastomer component is dispersed, by providing a light-blocking layer on the surface of the air permeation preventive layer. The method for applying the light-blocking layer is not particularly limited. It may, for example, be applied on the surface of the air permeation preventive layer in such a state that the light-blocking substance is dissolved or dispersed in a solvent.

However, in a preferable aspect of the present invention, when vulcanizing the pneumatic tire, to improve the mold releasability between the inner surface of the green tire and the tire vulcanization bladder, the general practice is to coat a release agent using, for example, silicon as its main ingredient on the inner surface of the green tire (i.e., the contact surface with the bladder) in advance. However, such a general tire release agent has a low degree of blackness and poor light-blocking property, and, therefore, when the layer of the thermoplastic resin or the thermoplastic elastomer composition is arranged on the surface for a tire, the thin film of the conventional release agent does not contribute to increasing the weather resistance.

However, according to the present invention, by compounding, into such a release agent, a light-blocking substance (or light-blocking agent) such as carbon black, it acts as a release agent at the time of vulcanization, and, after the vulcanization, and act as a light-blocking layer which covers the air permeation preventive layer. Thus the above problem can be solved.

The light-blocking layer of the pneumatic tire according to the present invention preferably has a light transmittance of less than 10%, more preferably less than 1%, in the range of a wavelength of 280 to 400 nm. Note that this measurement is carried out by using a general spectrophotometer and by calculating an average for each 10 nm within a range of 280 to 400 nm. This is because this wavelength region is the range of ultraviolet light, and ultraviolet light is the primary cause of the photodegradation.

The light-blocking substance usable in the present invention is not particularly limited, but, for example, carbon black, aniline black, titanium oxide, zinc oxide, metal powder (e.g., aluminum flakes) and the like may be mentioned. Among these, since carbon black has a high light-blocking effect even among the different types of light-blocking substances, the use of carbon black is preferred. The compounding amount of the light-blocking substance, in particular carbon black, is, in terms of the ratio in the light-blocking layer, preferably to the solid content of the release agent, 1.1 to 50% by weight, more preferably 3 to 15% by weight, further preferably 5 to 10% by weight. If this amount is low, the desired light-blocking effect is liable to not be obtained, while conversely if too high, the release agent will unpreferably degrade. When carbon black is used, the use of the nongradulated carbon black having a specific surface area of the carbon black particles according to the BET method using nitrogen of 30 to 400 m²/g, preferably 100 to 400 m²/g, and the average particle size of the primary particles of 10 to 80 nm, preferably 10 to 30 nm. If the primary particle size is too large, the dispersability is poor and the light-blocking property is liable to be decreased and, therefore, this is not preferable. On the other hand, if the specific surface area is too small, the thickening effect is liable to be decreased and therefore, this is not preferable. On the other hand, if too large, the material is liable to be over-thickened, and, therefore, this is not preferable.

As the release agent used as the light-blocking layer in a preferable aspect of the present invention, like in the prior art, it is possible to use an oil-in-water emulsion of silicone oil (i.e., silicone emulsion) into which an inorganic powder having a high lubricating property such as mica, talc and a surfactant and, further, a light-blocking substance according to the present invention are compounded to improve the light-blocking property. By doing so, the pneumatic tire according to the preferable aspect of the present invention is characterized by having a release agent comprising a silicone emulsion and an inorganic powder as main ingredients and further containing a light-blocking substance coated, as a light-blocking layer, on the tire inner wall surface (the surface of air permeation preventive layer).

The release agent usable in the present invention is comprised of an aqueous release agent including an oil-in-water emulsion of silicone oil having a viscosity of 100 to 1,000,000 cst (25°C), preferably 100,000 to 1,000,000 cst (25°C), emulsified by an emulsifier and an inorganic powder (e.g., talc or mica), a surfactant (e.g., an anionic surfactant, cationic surfactant, amphoteric surfactant or nonionic surfactant), water etc., into which a light-blocking substance is compounded.

Further, the release agent according to the present invention may contain, in addition to the silicone oil emulsion, inorganic powder, various surfactants, water and carbon black, various other additives in a range not interfering with the effects of the present invention. As such additives, for example, preservatives (e.g., sodium nitrite and sodium benzoate), binders (e.g., casein, lecithin, albumin, polyvinyl alcohol, carboxymethylcellulose and powdered polyolefin resin) etc. may be mentioned.

As typical thermoplastic resins usable for forming the air permeation preventive layer in the present invention, polyamide-based resins (e.g., Nylon 6 (N6), Nylon 66 (N66), Nylon 46 (N46), Nylon 11 (N11), Nylon 12 (N12), Nylon 610 (N610), Nylon 612 (N612), Nylon 6/66 copolymer (N6/66), Nylon 6/66/610 copolymer (N6/66/610), Nylon MXD6 (MXD6), Nylon 6T, Nylon 6/6T copolymer, Nylon 66/PP copolymer, Nylon 66/PPS copolymer, and their N-alkoxyalkyl compounds), polyester-based resins (e.g., polybutylene terephthalate (PBT), polyethylene terephthalate (PET), polyethylene isophthalate (PE10), PET/PEI copolymer, polyarylate (PAR), polybutylene naphthalate (PBN), liquid crystal polyester, polyoxyalkylene diimide diacid/polybutyrate terephthalate copolymer and other aromatic polyesters), polynitrile-based resins (e.g., polyacrylonitrile (PAN), polymethycrylonitrile, acrylonitrile/styrene copolymer (AS), methacrylonitrile/styrene copolymer and methacrylonitrile/styrene/butadiene copolymer), polymethacrylate-based resins (e.g., polymethyl methacrylate (PMMA) and polyethyl methacrylate), polyvinyl acetate-based resins (e.g., vinyl acetate (PVA) and ethylene/vinyl acetatecopolymer (EVA)), polyvinyl alcohol resins (e.g., polyvinyl alcohol (PVOH), vinyl alcohol/ethylene copolymer (EVOH)), polyvinyl chloride-based resins (e.g., polyvinylidene chloride (PVDC), polyvinyl chloride (PVC), vinyl chloride/vinylidene chloride copolymer, vinylidene chloride/methyl acrylate copolymer and vinylidene chloride/acrylonitrile copolymer), cellulose-based resins (for example cellulose acetate, cellulose acetate butyrate), fluorine-based resins (e.g., polyvinylidene fluoride (PVDF), polyvinyl fluoride (PVF), polychlorofluoroethylene (PCTFE) and tetrafluoroethylene/ethylene copolymer), imide-based resins (e.g., aromatic polyimide (PI)) and the like may be mentioned. These may be used alone or in any combination thereof.

On the other hand, another material forming the air permeation preventive layer in the present invention, that is, the thermoplastic elastomer composition, contains such a thermoplastic resin in which an elastomer component is dispersed. A combination of one type or more of the thermoplastic resin and the elastomer component may be mentioned. This elastomer component is not particularly limited, but diene-based rubbers and their hydrogenates (e.g., NR, IR, epoxylated natural rubber, SBR, BR (high cis BR and low cis BR), NBR, hydrogenated NBR and hydrogenated SBR), olefin-based rubbers (e.g., ethylene propylene rubber (EPDM and EPM), maleated ethylene propylene rubber (M-EPM), IIR, isobutylene and aromatic vinyl or diene-based monomer copolymers, acryl rubber (ACM), halogen-containing rubbers (e.g., Br-IIR, Cl-IIR, brominated isobutylene paramethyl styrene copolymer (Br-IPMS), CR, hydrin rubber (CHR·CHC); chlorosulfonated polyethylene (CSM), chlorinated polyethylene (CM), and maleated chlorinated polyethylene (M-CM)), silicone rubber (e.g., methylvinyl silicone rubber, dimethyl silicone rubber and methylphenylvinyl silicone rubber), sulfur-containing rubber (e.g., polysulfate rubber), fluorine rubber (e.g., vinylidene fluoride-based rubber, fluorine-containing vinyl ether-based rubber, tetrafluoroethylene-propylene-based rubber, fluorine-containing silicone-based rubber, fluorine-containing phosphagen-based rubber), thermoplastic elastomers (e.g., styrene-based elastomers, olefin-based elastomers, and polyamide-based elastomers), etc. may be mentioned. These may be used alone or in any combination thereof.

The thermoplastic resin and the thermoplastic elastomer composition may suitably contain, in addition to the necessary components, to an extent not impairing the necessary characteristics of the polymer composition for the tire of the present invention, a compatibilizer, antioxidant, vulcanizer, vulcanization accelerator, vulcanization accelerator aid, vulcanization retardant, plasticizer, filler, colorant, processing aid and other various types of additives, which are suitably compounded therein.

The air permeation preventive layer may be a thermoplastic film comprising only the thermoplastic resin or the thermoplastic elastomer composition, however, it is preferable in work to employ a laminate of the thermoplastic film and a binding layer having adhesive properties with respect to the rubber. As such a binding layer, for example, a composition of a rubber component (e.g., natural rubber, styrene-butadiene rubber, isobutylene-isoprene rubber, butadiene rubber, polyisobutylene, polyisoprene, styrene-butadiene-styrene block copolymer, styrene- isoprene-styrene block copolymer and their epoxy modified products and maleic acid modified products) into which a rubber blend strengthening agent (e.g., carbon black or calcium carbonate), adhesive resin (e.g., RF resin), tackifier (e.g., terpene resin, terpene phenol resin, modified terpene resin, hydrogenated terpene resin, rosin ester or alicyclic saturated hydrocarbon resin), and the like are compounded and further into which a vulcanizer, vulcanization accelerator, oil, antioxidant, plasticizer and the like are suitably compounded or a phenolic resin-based (Chemlock 220), chlorinated rubber-based (Chemlock 205), and isocyanate-based (Chemlock 402) binder etc. may be mentioned.

### EXAMPLES

Examples will now be illustrated to further explain the present invention, but the scope of the present invention is by no means limited to these Examples.

### Standard Example 1, Example 1 and Comparative Examples 1 and 2

The conventional Standard Example 1 having poor light-blocking property, Example 1 of the present invention and Comparative Examples 1 and 2 having no light-blocking properties were tested, using release agents of the formulations shown below (see Table I):

**Table I**

| Contents of release agent formulation | Standard | Example 1 | Comparative Example 1 | Comparative Example 2 |
|---|---|---|---|---|
| Formulation components | Formulation (parts by weight ) | | | |
| Silicone emulsion^{*1} | 7.5 | 7.5 | 50 | 50 |
| Mica powder^{*2} | 15 | 13 | - | - |
| Talc powder^{*3} | 30 | 26 | - | - |
| Surfactant^{*4} | 2 | 2 | - | - |
| Carbon black^{*5} | 0.5 | 6.5 | - | - |
| Water | 45 | 45 | 50 | 50 |
| Total | 100 | 100 | 100 | 100 |

| | | | | |
|---|---|---|---|---|
| Footnotes of Table I *1: Silicone Emulsion SH490 made by Dow Corning Toray *2: Mica powder FS Maruai made by Sanshin Mining Ind. Co. *3: Talc powder SP50A made by Fuji Talc Industrial Co. *4: Surfactant BY-22-721 made by Dow Corning Toray *5: Carbon Black MA-600 made by Mitsubishi Carbon Black | | | | |

### Preparation of Release Agent

### Release Agent of Standard Example 1

According to the formulation of Standard Example 1 in Table I, a release agent was obtained by stirring the silicone emulsion, water and the surfactant to thereby obtain a dispersion, then gradually adding thereto the mica powder and talc powder.

### Release Agent of Example 1

According to the formulation of Example 1 in Table I, a release agent was obtained by stirring the silicone emulsion, water and surfactant to thereby obtain a dispersion, then gradually adding thereto the mica powder, talc powder, and further carbon black.

### Release Agent of Comparative Examples 1 and 2

According to the formulations of Comparative Examples 1 and 2 in Table I, the release agents were obtained by stirring the silicone emulsions and water to thereby obtain dispersions.

### Preparation of Evaluation Tire

### Preparation of Thermoplastic Elastomer Composition

According to the formulation ratios (parts by weight) shown in Table II, a resin, rubber material and a cross-linking compounding agent necessary for dynamic crosslinking were mixed using a twin screw kneading extruder at a temperature of 230°C to obtain a thermoplastic elastomer composition in a state where the rubber is finely dispersed in the thermoplastic resin whereby a continuous phase is formed. This was then extruded in a strand state from the discharge outlet of the twin screw kneading extruder. The resultant strands were made into pellets by a cutter to prepare pellets of the thermoplastic elastomer composition of the present invention. Here, in Standard Example 1, Example 1 and Comparative Example 1, the composition 1 in Table II is used, while in Comparative Example 2, the composition 2 in which a photodegradation preventing agent etc. are used, was used.

**Table II**

| | Composition 1 | | | Composition 2 |
|---|---|---|---|---|
| | Standard Example 1 | Example 1 | Comparative Example 1 | Comparative Example 2 |
| Formulation components | Formulation (parts by weight) | | | Formulation (parts by weight) |
| Nylon 11^{*1} | 24 | 24 | 24 | 24 |
| Nylon 6.66^{*2} | 16 | 16 | 16 | 16 |
| BIMS^{*3} | 60 | 60 | 60 | 60 |
| Zinc white^{*4} | 0.3 | 0.3 | 0.3 | 0.3 |
| Stearic acid^{*5} | 1.2 | 1.2 | 1.2 | 1.2 |
| Zinc stearate^{*6} | 0.6 | 0.6 | 0.6 | 0.6 |
| Ultraviolet Light absorber^{*7} | 0 | 0 | 0 | 0.5 |
| Light Stabilizer^{*8} | 0 | 0 | 0 | 0.5 |

| | | | | |
|---|---|---|---|---|
| *1: BESN O TL made by Arkema *2: 5033B made by Ube Industries *3: Exxpro MDX89-4 made by Exxon Mobil Chemical *4: Zinc Oxide #3 made by Seido Chemical Industry *5: Beads Stearic Acid made by NOF *6: Zinc stearate made by Seido Chemical Industry *7: Tinuvin 234 made by Chiba Specialty Chemicals *8: Tinuvin 622LD made by Chiba Specialty Chemicals | | | | |

### Preparation of Adhesive Composition

To attach the thermoplastic elastomer composition to the tire inner surface, the formulation ratio (parts by weight) shown in Table III and a twin screw kneading extruder were used to sufficiently mix the heat crosslinkable polymer and the tackifier, then extrude the mixture in a strand state from the discharge outlet. The resultant strands were water cooled, then made into a pellet state by a cutter to prepare pellets of an adhesive composition.

**Table III**

| Formulation components | Formulation (parts by weight) |
|---|---|
| Epoxy modified SBS^{*1} | 50 |
| SBS^{*2} | 50 |
| Tackifier^{*3} | 100 |
| Zinc white^{*4} | 3 |
| Stearic acid^{*5} | 1 |
| Peroxide^{*6} | 1 |

| | |
|---|---|
| *1: Epofriend A1020 made by Daicel Chemical Industries *2: Tufprene 315 made by Asahi Kasei *3: Pensel AD made by Arakawa Chemical Industries *4: Zinc White #3 made by Seido Chemical Industry *5: Beads Stearic Acid made by NOF *6: Parkadox 14 made by Kayaku Akzo | |

### Inflation Molding

Pellets of the thermoplastic elastomer composition and the adhesive composition were used and a general two-layer inflation molding machine was used for inflation molding a laminate film at a temperature of 230°C, whereby a laminate film of the thermoplastic elastomer composition and the adhesive composition was obtained. The thickness of the thermoplastic elastomer composition was 200 µm and the thickness of the adhesive composition was 50 µm.

### Preparation of Tire

The above double layer film was wound on a tire drum so that the thermoplastic elastomer composition was on the drum side and the adhesive agent was on the tire member side. The tire members were stacked thereon. The resultant assembly was inflated to mold a green tire, then a release agent was coated on the inner liner of the tire inner surface using a spray gun, then the resultant assembly was dried and then vulcanized (conditions: 180°C x 10 minutes) to prepare a tire having a tire size of 165SR13.

### Evaluation of Light-Blocking Property

A colorless, transparent quartz plate was coated, under the coating conditions used in the tire preparation, with each release agent of Standard Example 1, Example 1, Comparative Example 1 and Comparative Example 2. A general spectrophotometer (UV-1600 made by Shimadzu) was used to determine the light absorbance in the range of 280 to 400 nm every 10 nm. The light absorbance was also determine in the case having no release agent coated. The transmittance of the quartz plate when coating the release agent was calculated indexed to the case of not coating the release agent as a transmittance of 100%. The transmittances at the different wavelengths were averaged to obtain light transmittances of 280 to 400 nm. The results of the light transmission as determined are shown in Table IV.

### Evaluation of Weather Resistance

Tires prepared by the above method using the release agents of Standard Example 1, Example 1, Comparative Example 1 and Comparative Example 2 were placed on the ground on their sides and allowed to stand outdoors for 3 months, then were evaluated for weather resistance by the following durability test.

### Tire Durability Test Method

165SR13 steel radial tires (rim: 13x41/2-J) were used and driven on at an air pressure of 140 kPa and a load of 5.5 kN on an actual road for 10,000 km. After driving, the tires were removed from the rims, and the inner liner layers of the tire inner surfaces were visually observed. Tires having fissures, cracks, visually observable wrinkles or peeling and blistering in the inner liner surfaces are judged as failing (poor), while those without any of these were judged as passing (good). The results are shown in Table IV. In the results of the durability test, fissures and cracks were observed in the liner layer in Standard Example 1 and Comparative Example 1, both of which have poor light-blocking properties, however, in Example 1, no defects were observed. Further, in Comparative Example 2, even if an antiphotodegradation agent (i.e., ultraviolet light absorber and light stabilizer) is compounded into the thermoplastic elastomer, when a release agent having a poor light blocking property is used, no increase in the light resistance was observed.

**Table IV**

| Specification | Light transmittance | Tire durability test result |
|---|---|---|
| Standard Example 1 | 30% | Poor |
| Example 1 | 0.5% | Good |
| Comparative Example 1 | 90% | Poor |
| Comparative Example 2 | 90% | Poor |

### INDUSTRIAL APPLICABILITY

As explained above, according to the present invention, by compounding a light-blocking substance in the release agent used, for example, during tire vulcanization to form a light-blocking protective layer on the surface of the air permeation preventive layer, the degradation when sunlight is irradiated can be prevented.

## Claims

1. A pneumatic tire having, as an air permeation preventive layer, a layer of a thermoplastic resin or a layer of a thermoplastic elastomer composition comprising a thermoplastic resin, in which an elastomer component is dispersed, arranged on the surface thereof and further having, on the surface of the layer of the thermoplastic resin or the layer of the thermoplastic elastomer composition, a light-blocking layer having a light transmittance of less than 10% in the range of a wavelength of 280 to 400 nm.

2. A pneumatic tire as claimed in claim 1, wherein the light-blocking layer contains a light-blocking substance.

3. A pneumatic tire as claimed in claim 1 or 2, wherein the light-blocking substance is carbon black.

4. A pneumatic tire as claimed in any one of claims 1 to 3, wherein the amount of carbon black blended in the light-blocking layer is 1.1 to 50% by weight based upon the solid content of the light-blocking layer.

5. A pneumatic tire as claimed in any one of claims 1 to 4, wherein the specific surface area of the carbon black according to a BET nitrogen method is 30 to 400 m²/g and the average particle size of the primary particle of the carbon black is 10 to 80 nm.

6. A pneumatic tire as claimed in any one of claims 1 to 5, wherein the thermoplastic resin is at least one resin selected from the group consisting of polyamide-based resins, polyester-based resins, polynitrile-based resins, polymethacrylate-based resins, polyvinyl acetate-based resins, polyvinyl alcohol-based resins, polyvinyl chloride-based resins, cellulose-based resins, fluorine-based resins and imide-based resins.

7. A pneumatic tire as claimed in any one of claims 1 to 6, wherein the elastomer component is at least one component selected from the group consisting of diene-based rubbers, olefin-based rubbers, sulfur-containing rubbers, fluorine rubbers and thermoplastic elastomers.
